# EUROPÄISCHE PATENTANMELDUNG

(11) **EP 4 560 172 A1**
(43) Veröffentlichungstag der Anmeldung: **28.05.2025**
(21) Anmeldenummer: 24214134.9
(22) Anmeldetag: 20.11.2024
(51) Int. Cl.: F16L 37/091, F16L 13/14

(54) **KLEMMRING FÜR EINEN FITTING UND FITTING MIT EINEM KLEMMRING**

(30) Priorität: 22.11.2023 DE 102023132504
(71) Anmelder: Viega Technology GmbH & Co. KG, 57439 Attendorn (DE)
(72) Erfinder: Hofrichter, Simon, 57399 Kirchhundem (DE); Pace, Mario, 57368 Lennestadt (DE); Köster, Paul, 57462 Olpe (DE)
(74) Vertreter: Cohausz & Florack

(57) **Zusammenfassung**

Die Erfindung betrifft einen Klemmring (2) für ein Fitting für eine Verbindung mit einem Rohr, mit einer Mehrzahl von Ringelementen (4), wobei die Ringelemente (4) zum Halten und/oder Fixieren eines einzusteckenden Rohrs ausgebildet sind, der dadurch gekennzeichnet ist, dass mindestens ein Ringelement (4) als Hemmelement (33) mit einer radial nach innen gerichteten Nocke (34) ausgebildet ist, dass die Nocke (34) in radialer Richtung elastisch nach außen verschwenkbar ausgebildet ist und dass die Nocke (34) eine radial nach innen gerichtete gebogene Oberfläche (35) aufweist. Die Erfindung betrifft auch ein Fitting und ein System aus Fitting und Rohr. Der Klemmring (2) führt zu einer verbesserten Selbsthemmung des eingeschobenen Rohres (42).

## Beschreibung

Die Erfindung betrifft einen Klemmring für ein Fitting für eine Verbindung mit einem Rohr, ein Fitting für eine Verbindung mit einem Rohr mit einem Klemmring sowie ein System aus einem Fitting und einem Rohr.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um ein Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels einer Pressbacke radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Bei Pressfittings wird unterschieden, ob ein Rohr beim Verpressen von außen abgedichtet und fixiert wird oder ob zumindest ein Teil des Fittings, beispielsweise in Form einer Stützhülse von innen das abzudichtende Rohr stabilisiert. Die vorliegende Erfindung betrifft beide Arten von Fittings.

Als Materialien für von außen abzudichtende Rohre werden einerseits feste Werkstoffe, insbesondere metallische Werkstoffe eingesetzt. Als feste Werkstoffe kommen auch feste Kunststoffe in Frage. Als Materialien kommen hierfür in Frage insbesondere Metalle beispielsweise Edelstähle wie ferritische Stähle wie 1.4520, 1.4521, austenitische Stähle wie 1.4404, Duplex-Stähle wie 1.4462, Rotguss, SiBr, Kupfer, aber auch feste Kunststoffe wie beispielsweise vernetztes Polyethylen (PE-X), Polyethylen erhöhter Temperaturbeständigkeit (PE-RT), Polyvenylchlorid (PVC) sowie Polypropylen (PP) bei entsprechenden Wandstärken zum Einsatz. Des Weiteren können Mehrschichtverbundrohre ausreichend starr für eine Abdichtung von außen ausgeführt sein, beispielsweise über eine dickere Aluminium-Lage, ebenso können auch faserverstärkte Rohre eingesetzt werden. Von innen abzudichtende Rohre können aus den gleichen Kunststoffen oder aus Verbund aus Kunststoff und Metallschichten bestehen, jedoch mit einer geringeren Wandstärke ausgebildet sein, so dass die Flexibilität durch die geometrische Ausgestaltung gewährleistet wird.

Die beschriebenen Fittings und deren Komponenten bestehen bevorzugt aus einem Metall, um eine Verformbarkeit bei ausreichender Härte und Formstabilität nach dem Umformen zu gewährleisten. Als Metalle kommen die für die starren Rohre bereits genannten Metalle in Frage, beispielsweise Edelstähle wie ferritische Stähle wie 1.4520, 1.4521, austenitische Stähle wie 1.4404, Duplex-Stähle wie 1.4462, Rotguss, SiBr, Kupfer.

Die beschriebenen Fittings und deren Komponenten können jedoch auch aus einem nicht-metallischen Werkstoff bzw. Kunststoff bestehen, wenn der nicht-metallische Werkstoff ausreichende Eigenschaften für ein Verpressen und dauerhaftes Verbinden mit Rohren ermöglicht. Als Werkstoffe kommen hier beispielsweise die folgenden Stoffe in Frage: vernetztes Polyethylen (PE-X), Silan-vernetztes Polyethylen (PE-Xb) oder physikalisch vernetztes Polyethylen (PE-Xc), Polyethylen erhöhter Temperaturbeständigkeit (PE-RT), Polyvenylchlorid (PVC), Polypropylen (PP) bei entsprechenden Wandstärken, Polyphenylsulfon (PPSU), Polyetheretherketon (PEEK) oder Polyaryletherketon (PAEK), aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

Fittings zum Verbinden mit einem von außen abzudichtenden Rohr können verschiedene Ausgestaltungen aufweisen. In der Regel ist ein Dichtungsring, beispielsweise ein O-Ring, zum Abdichten des Fittings gegenüber der Rohraußenseite vorgesehen. Des Weiteren sind Halteelemente und/oder Fixierelemente vorgesehen, die vor und nach dem Verpressen das Rohr in der erforderlichen Position relativ zum Fitting fixieren.

Beispielsweise weist ein Fitting für eine Verbindung mit einem Rohr einen Grundkörper einen Aufbau mit einem in dem Grundkörper umfangseitig ausgebildeten und nach innen vorstehenden Anschlagelement, mit einer mit dem Grundkörper verbundenen und eine Außenkontur bildenden Presshülse, wobei die Presshülse eine nach innen zum aufzunehmenden Rohr hin gerichtete Kammer aufweist, mit einem in der Kammer angeordneten Klemmring und mit einem Dichtelement auf, wobei die Presshülse geeignet ist, zusammen mit dem Klemmring und dem Dichtelement das zu verbindende Rohr abzudichten.

Der Grundkörper des Klemmrings ist aus einem Kunststoff hergestellt und weist eine geschlossene Ringform auf. Um den Klemmring in ein Fitting bzw. in die hinterschnittene Kammer der Presshülse einzusetzen, muss dieser radial zusammengedrückt werden, wozu axial verlaufende Schlitze vorgesehen sind, die das Zusammendrücken ermöglichen.

Problematisch bei der zuvor beschriebenen Ausgestaltung der Fittings und der dabei verwendeten Klemmringe ist, dass zum einen für jeden Fitting ein spezifischer Klemmring hergestellt werden muss. Zum anderen ist das Herstellen der Klemmringe aufwändig, weil in der runden Form Halteelemente ausgebildet und/oder Fixierelemente integriert werden müssen und zahlreiche Schlitze eingebracht werden müssen, um die Verformbarkeit für die Installation zu gewährleisten. Außerdem ergibt sich durch die Anordnung von Schlitzen keine durchgehende Anlagefläche für den O-Ring, wodurch die Lebensdauer der Verbindung verkürzt sein kann.

Nach einem Einstecken eines Rohres in das Fitting wird das Rohr durch den Klemmring gehalten und zentriert. Die Einschubkraft entspricht dabei im Wesentlichen der Auszugskraft, so dass keine definierte Selbsthaltung des Rohres im Fitting erreicht wird. Durch einen Kontakt zwischen der Dichtung und dem Rohr kann zwar die Haltekraft vorgegeben werden, jedoch ist aufgrund von Toleranzschwankungen der Dichtungen die Haltekraft nicht eindeutig und zuverlässig vorbestimmt.

Daher liegt der vorliegenden Erfindung die Aufgabe zugrunde, einen Klemmring und einen Fitting mit einem solchen Klemmring anzugeben, wobei die Selbsthaltung eines eingeschobenen Rohres verbessert ist. Zudem besteht die Aufgabe darin, dass die Herstellung des Klemmrings vereinfacht und dessen Einsatz flexibler ausgestaltet ist.

Die zuvor aufgezeigte Aufgabe wird erfindungsgemäß gelöst durch einen Klemmring für ein Fitting für eine Verbindung mit einem Rohr mit einer Mehrzahl von Ringelementen, wobei die Ringelemente zum Halten und/oder Fixieren eines einzusteckenden Rohrs ausgebildet sind, wobei mindestens ein Ringelement als Hemmelement mit einer radial nach innen gerichteten Nocke ausgebildet ist,
wobei die Nocke in radialer Richtung elastisch nach außen verformbar ausgebildet ist und wobei die Nocke eine radial nach innen gerichtete gebogene Oberfläche aufweist.

Die oben aufgezeigte technische Aufgabe wird erfindungsgemäß auch durch ein Fitting für eine Verbindung mit einem Rohr mit einem Grundkörper, mit einem in dem Grundkörper umfangseitig ausgebildeten und nach innen vorstehenden Anschlagelement, mit einer mit dem Grundkörper verbundenen Presshülse, wobei die Presshülse eine nach innen zum aufzunehmenden Rohr hin gerichtete Kammer aufweist, mit einem in der Kammer angeordneten Klemmring, wobei der Klemmring aus einem Kunststoff besteht und eine Mehrzahl von Ringelementen aufweist, und mit einem Dichtelement, wobei die Presshülse geeignet ist, zusammen mit dem Klemmring und dem Dichtelement das zu verbindende Rohr abzudichten und wobei ein zuvor beschriebener Klemmring vorgesehen ist.

Im Fitting ist die nach innen gerichtete gebogene Oberfläche der Nocke dem einzusteckenden Rohr zugewandt und liegt an der Außenseite des Rohres an. Durch die Bewegung des Rohres in das Fitting hinein wird die Nocke nach außen verformt und ggf. verschwenkt und bleibt beim Verschwenken aufgrund der gebogenen Oberfläche in Kontakt mit dem Rohr.

Die Nocke ist bevorzugt in Einschubrichtung des Rohrs unter einem Winkel kleiner 90° zur Achse des einzuschiebenden Rohres schräg ausgerichtet. Durch den Kontakt mit dem Rohr muss die Nocke bei Einschieben in Richtung ihrer schrägen Ausrichtung nach außen verformt werden und wird somit an das Rohr angedrückt. Dadurch erhöht sich der Anpressdruck an das Rohr und die Haftreibung erhöht sich.

Beim ggf. unabsichtlichen Herausziehen des Rohres aus dem Fitting wird die Nocke aufgrund der Haftreibung mitbewegt, wobei das Hemmelement als Ganzes nicht oder nur geringfügig axial bewegt wird. Durch die Mitbewegung der Nocke entgegen ihrer schrägen Ausrichtung kommt es zu einem weiteren Verformen, das eine zusätzlicheGegenkraft gegenüber dem Herausziehen hervorruft. Dadurch erhöht sich die Auszugskraft gegenüber der Einschubkraft und eine verbesserte Selbsthaltung wird dadurch erreicht. Eine geringere Einschubkraft erleichtert das Verbinden von Rohr und Fitting und eine größere Auszugskraft verbessert die Selbsthaltung.

Durch die Ausgestaltung des Hemmelementes als Teil des Klemmrings wird die Vormontage, insbesondere die Vormontage einer Installation an der Wand oder in einem Schacht erleichtert. Die unverpresste Verbindung zwischen Rohr und Fitting ist dann durch die höhere Auszugskraft besser vor einem Auseinandergleiten besser geschützt.

In bevorzugter Weise sind mindestens drei Hemmelemente mit Nocken vorgesehen und die Nocken bilden an der radial nach innen gelegenen Seite einen Durchmesser kleiner als der Außendurchmesser des einzuschiebenden Rohrs bilden. Da die Fittings und die darin zu verbauenden Klemmringe jeweils für bestimmte Nennweiten ausgebildet sind, können diese auch ohne ein vorhandenes Rohr definiert sein. Da der Innendurchmesser kleiner als der Außendurchmesser des Rohres ist, ist die Anlage der Nocken an der Außenseite des Rohres sichergestellt.

Der Klemmring kann in verschiedener Weise ausgebildet sein.

Zunächst kann eine Mehrzahl von Scharnierelementen zum verschwenkbaren Verbinden von jeweils zwei Ringelementen vorgesehen sein, wobei die Ringelemente mittels der Scharnierelemente eine Streifenform aufweisen und wobei die Ringelemente eine flache Form oder eine seitlich offene Ringform annehmen können.

Der Klemmring kann somit in vorteilhafter Weise als Flachprodukt hergestellt sein, wobei die einzelnen Ringelemente mittels der Scharnierelemente beweglich miteinander verbunden sind. Die Ringelemente bilden somit einzelne Segmente des Pressrings. Der Begriff "Flachprodukt" bzw. "flach" bedeutet dabei, dass die Ringelemente durch die Scharnierelemente in eine langgestreckte, flache und streifenförmige Form gebracht werden können und die Ringelemente im Wesentlichen eben auf einer Fläche aufliegen können.

Die Scharnierelemente sind bevorzugt als Filmscharniere integral mit den Ringelementen ausgebildet, so dass der Klemmring in einer einstückigen Grundform vorliegt. Daher kann der Klemmring in bevorzugter Weise mit einem Kunststoff-Extrusionsverfahren als Endlosprofil hergestellt werden. Durch die Ausbildung als flacher streifenförmiger Klemmring wird weiterhin die Montage von zusätzlichen Elementen wie Schneidelementen erleichtert, die nach der Herstellung des Streifens leichter integriert werden können, als wenn der Klemmring in Ringform vorliegt.

Die miteinander mittels der Scharnierelemente verbundenen Ringelemente können aus einer flachen Form in eine Ringform gefaltet werden. Für einen Einbau in einem Fitting wird der Klemmring daher in einer vorgegebenen Länge abgeschnitten und dann in einer offenen Ringform, ähnlich einer C-Form, in das Fitting eingesetzt. Für den Einbau kann die Form des Klemmrings durch die besondere Ausgestaltung mit den Scharnierelementen und der damit verbundenen besonderen Elastizität leicht radial nach innen umgeformt werden. Gegebenenfalls können sich die freien Enden des Klemmrings beim Einbauen überlappen und beim Einfügen in die Kammer der Presshülse sich zur Ringform entfalten. Somit wird eine Montage insbesondere in Fittings mit kleinen Durchmessern erleichtert.

Beim radialen Verpressen des Fittings mittels eines Presswerkzeugs bilden die Scharnierelemente und die angrenzenden Bereiche der Ringelemente die Verformungszonen. Die Verformungszonen sind daher gleichmäßig und gegebenenfalls sogar symmetrisch in Umfangsrichtung verteilt angeordnet. Beim Pressvorgang sorgen dann die Verformungszonen für eine in azimutaler Richtung gleichmäßige Krafteinleitung und insbesondere wird ein tangentiales Verschieben der Ringelemente eingeschränkt oder gar ganz vermieden. Insbesondere bei der nachfolgend beschriebenen Ausgestaltung des Ringelements als Fixierelement mit Schneidelement ist es vorteilhaft, dass eine tangentiale Bewegung des Schneidelements eingeschränkt bzw. vermieden wird.

Zudem bewirken die zusammengedrückten Scharnierelemente mit den Ringelementen zusammen im verpressten Zustand eine durchgängige Dichtungsanlagefläche, wodurch die Positionierung und Sicherung des Dichtelements.

Die zuvor beschriebenen Ringelemente und somit der Klemmring als Ganzes bestehen bevorzugt aus einem der nachfolgenden Materialien: vernetztes Polyethylen (PE-X), Silan-vernetztes Polyethylen (PE-Xb) oder physikalisch vernetztes Polyethylen (PE-Xc), Polypropylen (PP), Polyphenylsulfon (PPSU), Polyetheretherketon (PEEK) oder Polyaryletherketon (PAEK), aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

In bevorzugter Weise weisen die Ringelemente eine teilzylindrische Außenfläche auf. Somit passen sich die Ringelemente zumindest abschnittsweise außen an die zylindrische Form des Fittings im Bereich der Kammer der Presshülse an. In der flachen streifenförmigen Form können die Ringelemente daher mit einem Teilabschnitt ihrer teilzylindrischen Außenfläche auf einer ebenen Fläche aufliegen.

Des Weiteren können die Ringelemente in azimutaler Richtung Seitenflächen aufweisen, die zumindest abschnittsweise in radialer Richtung nach innen verjüngend zueinander ausgebildet sind. Somit können die Ringelemente zusammen mit dem sie verbindenden Scharnierelement eine V-Nut zwischen sich ausbilden. Diese V-Nut ermöglicht eine leichtere kreisförmige Anordnung der Ringelemente. Zudem bietet ein zusätzlicher Raum zwischen den Ringelementen ein Volumen, das beim Verpressen durch Material der Ringelemente ausgefüllt werden kann. Dieses führt zu einem gleichmäßigen Verteilen der Presskraft, die dauerhaft von der Presshülse über den Klemmring auf die Außenseite des Rohres ausgeübt wird.

In weiter bevorzugter Weise weisen die Ringelemente eine vorgegebene azimutale Länge auf, so dass durch ein Auftrennen des Streifens an Scharnierelementen in Streifen mit mindestens zwei unterschiedlichen Anzahlen von Ringelementen für mindestens zwei Klemmringe für Fittings mit mindestens zwei unterschiedlichen Normweiten möglich ist. Somit ist ein variabler Nennweiteneinsatz des Klemmrings durch ein Trennen auf unterschiedliche Längen möglich. Der Klemmring soll innerhalb des Fittings möglichst einen Vollkreis ausfüllen, um erstens eine durchgehende Anlagefläche für das Dichtelement und um zweitens einen festen Sitz des Klemmring vor dem Verpressen zu gewährleisten, um beispielsweise ein Herausfallen während des Transports zu verhindern.

Für die Mehrfachverwendung eines zuvor beschriebenen Klemmrings zu ermöglichen, wird Teilung des Klemmrings so gewählt, dass der volle Umfang bei zwei oder mehr Nennweiten erreicht werden kann.

Des Weiteren können die Ringelemente an dem einer einzusetzenden Dichtung zugewandten Ende einen Dichtungssitz aufweisen. Der Dichtungssitz wird vorzugsweise durch ein axial vorstehendes Halteelement realisiert, das den vom Ringelement aufgespannten Raum radial nach innen begrenzt und dadurch die Bewegungsfreiheit der Dichtung einschränkt. Das Ringelement kann aber auch abschnittsweise rund ausgebildet sein und allein durch eine axiale Anlage an der Dichtung die Bewegungsfreiheit der Dichtung einschränken.

Der Dichtungssitz verbessert einerseits den Dichtungsschutz, indem beim Verpressen des Fittings ein Herausdrücken der Dichtung in axialer Richtung eingeschränkt oder verhindert wird. Andererseits verhindert der Dichtungssitz ein Herausdrücken durch axial auftretende Kräfte beim Rohreinschub. Zudem wird die Position der Dichtung auch im unverpressten Zustand bei auftretenden Druckunterschieden gegen ein Verschieben gesichert, wenn durch Druckunterschiede die Dichtung in axialer Richtung angesaugt wird.

Als weitere Alternative kann der Klemmring mit seinen Ringelementen einstückig als einseitig offener Ring ausgebildet sein. Durch die offene Ringstruktur kann der Klemmring für ein Einsetzen in ein Fitting zusammengedrückt werden. Dieses erleichtert den Einbau des Klemmrings. Der Klemmring wird daher jeweils als Einzelstück für einen vorgegebenen Fitting hergestellt.

Die Ringelemente des Klemmrings können zusätzlich zur Funktion der Hemmelemente gleiche oder unterschiedliche Funktionen ausüben und daher unterschiedlich ausgestaltet sein. Die unterschiedlichen Funktionen können alternierend oder in anderer Weise abwechselnd durch die benachbart angeordneten Ringelemente realisiert sein.

Bei einer ersten bevorzugten Ausgestaltung sind die Ringelemente teilweise als Halteelemente ausgebildet und die Ringelemente weisen radial nach innen gerichtete, vorzugsweise elastisch ausgebildete, Führungselemente für ein Zentrieren und gegebenenfalls Halten eines einzuführenden Rohres auf. Somit dienen die Halteelemente zum einen beim Einführen des Rohres in ein Fitting und den darin angeordneten Klemmring für ein Zentrieren des Rohres und zum anderen nach dem Einführen und vor dem Verpressen des Fittings für ein Halten des Rohres mit definierten Montagekräften.

Das Zentrieren des Rohres beim Einführen in das Fitting wird zudem in bevorzugter Weise dadurch verbessert, dass in axialer Richtung hintereinander mindestens zwei radial verschieden weit nach innen vorstehende Führungselemente ausgebildet sind. Somit ergeben sich nacheinander während des Einschiebens des Rohres eine erste Zentrierung und eine zweite Zentrierung. Das erste vom Fitting aus betrachtet distale Führungselement kann weniger weit nach innen rein als das proximale Führungselement ragen, so dass insbesondere für schräg eingesetzte Rohre eine gute Führung hin zur richtigen Position für ein Verpressen erreicht wird. Darüber hinaus halten die verschiedenen Führungselemente das eingeschobene Rohr nach der Montage und vor dem Verpressen.

Die Ausbildung der Führungselemente führt zu definierten Montagekräften und daher auch zu einer verbesserten haptischen Kontrolle beim Einführen eines Rohres in das Fitting, insbesondere bei einer zweistufigen Ausbildung von zwei verschieden weit nach innen ragenden Führungselementen. Der Benutzer kann genauer haptisch kontrollieren, ob das Rohr richtig und weit genug eingeschoben worden ist.

Durch die Geometrie der Führungselemente mit definierter Materialstärke und Materialeigenschaften kann eine gleichbleibende Montage- und Rohrhaltekraft unabhängig der Toleranzen des Rohrs realisiert werden.

Die Führungselemente bewirken wegen der Zentrierungsfunktion, insbesondere zusammen mit dem oben beschriebenen Dichtungssitz zur genaueren Positionierung der Dichtung, dass während des Einschiebens des Rohres die äußere Oberfläche des Rohres mit der Innenseite der Dichtung nur in geringem Maße oder vorzugsweise gar nicht in Berührung kommt. Somit wird die Gefahr einer Beschädigung der Dichtung verringert und auch ohne Anwendung von gleitfördernden Mitteln wie Silikonöl können niedrige Einschubkräfte realisiert werden. Der Einsatz von Dichtungen ohne lackbenetzungsstörende Substanzen (LABS-frei) und ohne Silikon ist somit möglich.

Auch die Funktionalität einer im unverpressten Zustand gewollten undichten Anordnung aus Rohr und Dichtung wird durch die beschriebene Ausgestaltung verbessert, da das Positionieren und Halten des Rohrs relativ zur Dichtung verbessert wird. Weist beispielsweise die Dichtung einen ausreichend größeren Innendurchmesser als der Außendurchmesser des Rohres auf, dann kann eine gewollte Undichtigkeit im unverpressten Zustand erreicht und sichergestellt werden.

Alternativ zu den Halteelementen können die Ringelemente auch teilweise als Fixierelemente ausgebildet sein, wobei die Fixierelemente jeweils mindestens ein Schneidelement zum Fixieren eines einzuschiebenden Rohres aufweisen. Nach dem Einschieben und nach dem Verpressen des Fittings wird das Rohr durch die Fixierelemente vor einem Herausziehen des Rohres aus dem Fitting gesichert.

In bevorzugter Weise liegen die Schneidelemente innen am Rohr entlang eines linienförmigen Bereichs, insbesondere einer Schneide, und außen an der Kammer der Presshülse entlang eines flächigen Bereichs an. Dadurch kann beim Verpressen des Fittings die radial nach innen gerichtete Kraft effektiv zum Einschneiden des Schneidelements in die Wandung des Rohrs umgesetzt werden.

Bei einer bevorzugten Ausgestaltung des Klemmrings weisen die Fixierelemente in Umfangsrichtung neben den Schneidelementen angeordnete Schutzelemente auf, wobei die Schutzelemente in radialer Richtung weiter als die Schneidelemente nach innen ragen. Dadurch wird das Rohr beim Einschieben und vor dem Verpressen vor einem Kontakt mit den Schneidelementen geschützt und eine Beschädigung der Oberfläche des Rohres an ungewollten Stellen wird dadurch weitgehend vermieden. Die Schutzelemente wirken also ähnlich wie die oben beschriebenen Führungselemente.

In besonders bevorzugter Weise sind ein Teil der Ringelemente als Hemmelemente und zusätzlich ein Teil der Ringelemente als Halteelemente und/oder ein Teil der Ringelemente als Fixierelemente ausgebildet. Der Aufbau des Klemmrings ist daher sehr flexibel gestaltbar. So können Hemmelemente und Fixierelemente miteinander kombiniert werden, da die Hemmelemente auch eine Haltefunktion übernehmen können. Ebenso können Hemmelemente und Halteelemente miteinander kombiniert werden, wenn im Fitting ein separates Fixierelement, beispielsweise ein Fixierring angeordnet ist. Des Weiteren ist es auch möglich, dass die Ringelemente nur als Hemmelementen ausgebildet sind, wobei ein zusätzlicher Fixierring in der Presshülse angeordnet ist.

Die zuvor beschriebenen Führungselemente der Halteelemente und die Schutzelemente der Fixierelemente können zusätzlich zu den Schneidelementen zur Fixierung beitragen, indem diese beim Verpressen ebenfalls in die Rohrwandung eindringen. Somit kann die Anzahl der Fixierelemente gegenüber der Anzahl der Haltelemente geringer sein.

Das oben beschriebene Fitting kann für eine Abdichten des Rohres von außen oder von innen ausgebildet sein.

Für eine Abdichtung von außen ist das Dichtelement in der Kammer angeordnet und liegt außen an der Oberfläche des Rohres an.

Für eine Abdichtung von innen ist eine Stützhülse vorgesehen und das Dichtelement ist an der Außenseite des Stützkörpers angeordnet. Der Stützkörper wird bei der Montage in das Innere des eingeschobenen Rohrendes hinein geschoben und wirkt beim Verpressen stabilisierend. Das Dichtelement wirkt dann zwischen dem Stützkörper und der Rohrinnenseite.

Des Weiteren kann der Klemmring entgegen der Auszugsrichtung des einzuschiebenden Rohres ausgerichtete Schneidelemente aufweisen, die in mindestens einem der als Halteelemente ausgebildeten Ringelemente angeordnet sind. Die Schneidelemente dringen beim Verpressen teilweise in das Material des Rohres ein und führen zu einer verbesserten Fixierung des Rohres innerhalb des verpressten Fittings.

Die oben aufgezeigte Aufgabe wird erfindungsgemäß auch durch ein System für eine Verbindung eines zuvor beschriebenen Fittings mit einem Rohr gelöst, bei dem der Betrag der Auszugskraft größer als der Betrag der Einschubkraft zum Einschieben des Rohres in das Fitting ist. Bevorzugt ist dabei, dass der Betrag der Auszugskraft vorzugsweise um mindestens 20 %, optional um mindestens 50 %, vorzugsweise um mindestens 80% und insbesondere um mindestens 100% größer als die Einschubkraft ist.

Im Folgenden wird die Erfindung anhand von Ausführungsbeispielen mit Bezug auf die Zeichnung erläutert. In der Zeichnung zeigen
- Fig. 1a - 1g: ein Ausführungsbeispiel eines Klemmrings,
- Fig. 2a - 2b: den Klemmring in einer flachen Anordnung von zwei Seiten,
- Fig. 3: den Klemmring in einer runden Anordnung,
- Fig. 4a - 4c: den Klemmring in weiteren Ansichten,
- Fig. 5: ein Ausführungsbeispiel eines Fittings mit eingesetztem Klemmring,
- Fig. 6: den Fitting mit eingeschobenem Rohr vor einem Verpressen,
- Fig. 7: den Fitting nach dem radialen Verpressen,
- Fig. 8: den Fitting nach Fig. 6 im Querschnitt,
- Fig. 9: den Fitting nach Fig. 7 im Querschnitt,
- Fig. 10a: den Fitting vor dem Einschieben des Rohres,
- Fig. 10b: den Fitting während des Einschiebens des Rohres,
- Fig. 10c: den Fitting während des Herausziehens des Rohres,
- Fig. 11: ein Kraft-Weg-Diagramm zur Verdeutlichung der Stärke der Einschubkraft und der Auszugskraft und
- Fig. 12: ein weiteres Ausführungsbeispiel eines Fittings mit eingesetztem Klemmring.

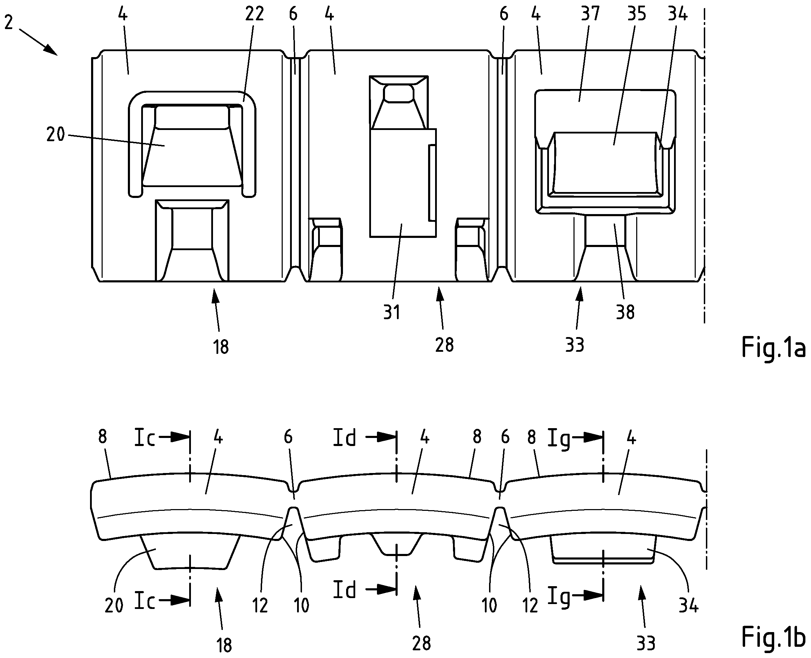

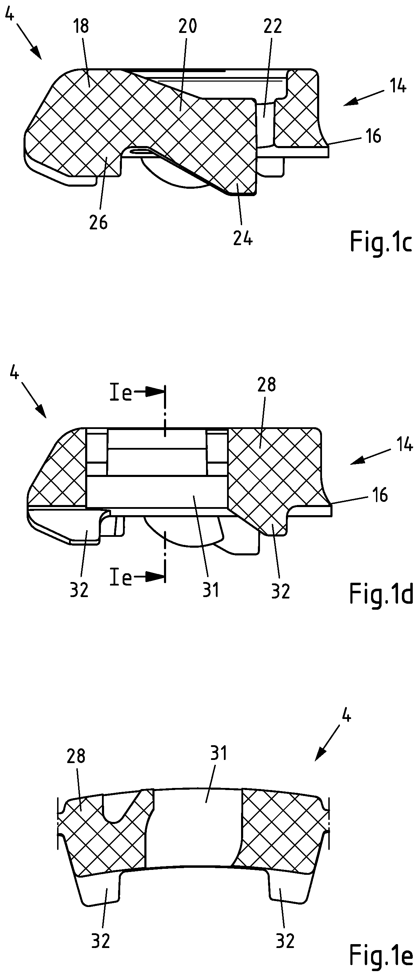

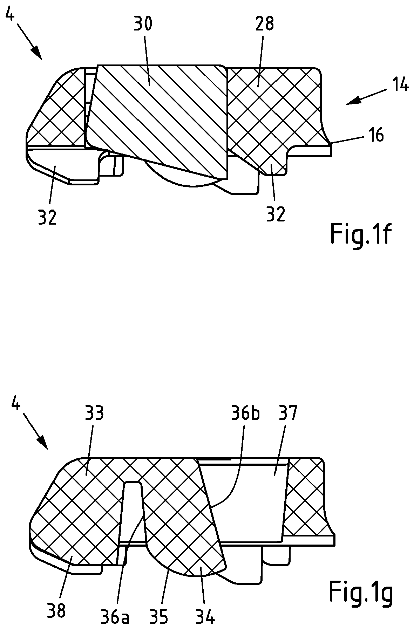

Die Fig. 1 bis 4 zeigen ein Ausführungsbeispiel eines Klemmrings 2 in verschiedenen Ansichten und Positionen.

Der Klemmring 2 ist geeignet für ein Fitting für ein von außen abzudichtendes Rohr, das weiter unten beschrieben wird. Der Klemmring 2 weist eine Mehrzahl von Ringelementen 4 auf, die jeweils mit Scharnierelementen 6 verschwenkbar miteinander verbunden sind. Die Ringelemente 4 dienen einem Halten und/oder einem Fixieren eines einzusteckenden Rohrs.

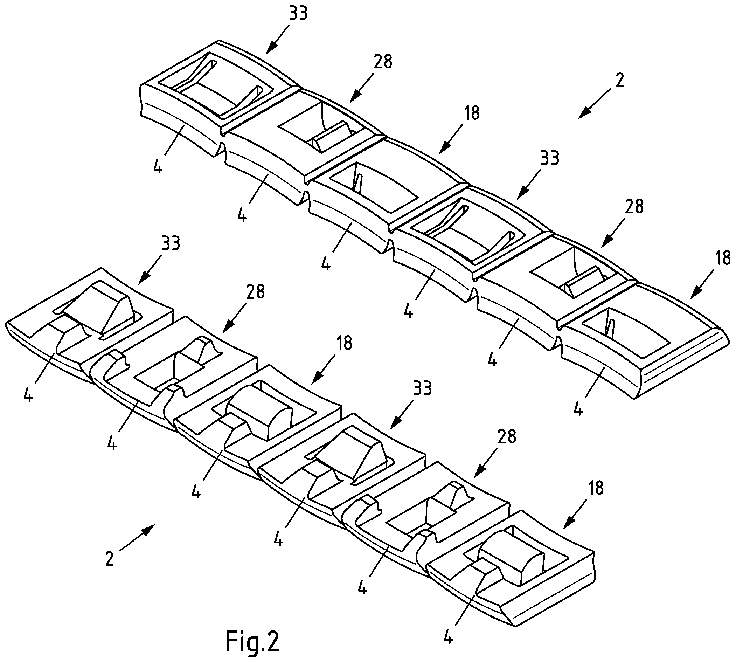

Weiterhin weisen die Ringelemente 4 mittels der Scharnierelemente 6 eine Streifenform auf, wie sich insbesondere aus den Fig. 1a, 1b und 2 ergibt. Die Ringelemente 4 können daher zum einen eine flache Form wie in Fig. 1a, 1b und 2 annehmen, wobei "flach" im Wesentlichen bedeutet, dass die Ringelemente 4 auf einer Fläche aufliegen können.

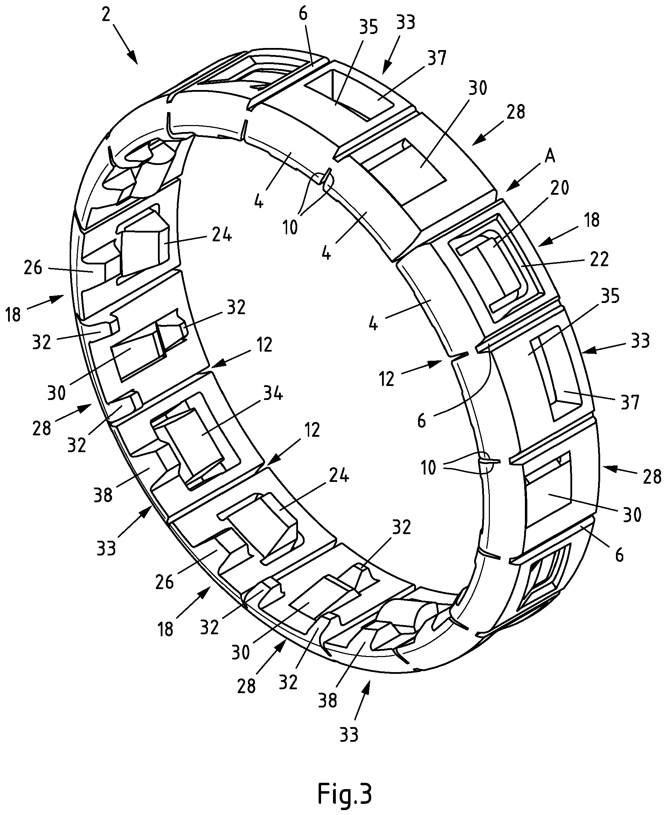

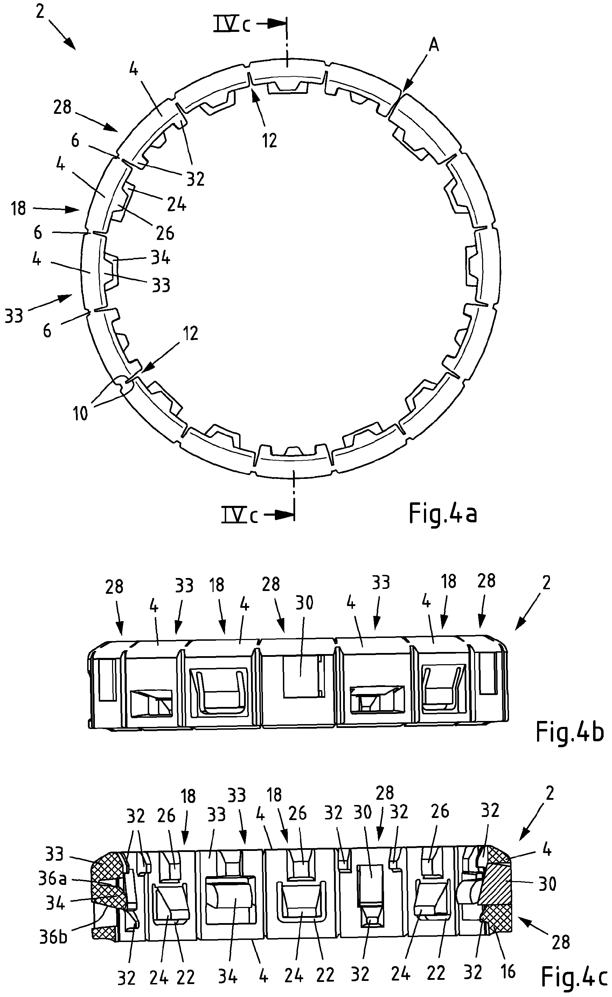

Zum anderen können die Ringelemente 4 mittels der Scharnierelemente 6 auch eine seitlich offene Ringform wie in Fig. 3, 4a bis 4c annehmen. Der Klemmring 2 weist in der Ringform eine einseitig offene C-Form auf.

Während der Herstellung des Klemmrings 2 als Endlosprodukt, beispielsweise als Produkt eines Kunststoffextrusionsverfahrens, hat die flache Anordnung den Vorteil, dass die Ringelemente 4 gegebenenfalls in einfacher Weise mit weiteren Elementen bestückt werden können, ohne dass eine Ringform zu aufwändigen Verfahrensschritten führt.

Wie sich aus den Fig. 1 bis 4 ergibt, weisen die Ringelemente 4 eine teilzylindrische Außenfläche 8 auf, die an die zylindrische Formen des Fittings bzw. der Kammer der zugeordneten Presshülse angepasst ist. Dadurch kann der Klemmring 2 zumindest abschnittsweise flächig am Fitting anliegen. In der flachen Form des Klemmrings 2 liegen die teilzylindrischen Außenflächen dann abschnittsweise auf einem Untergrund auf.

Weiterhin weisen die Ringelemente 4 in azimutaler Richtung Seitenflächen 10 auf, die zumindest abschnittsweise in radialer Richtung nach innen verjüngend zueinander ausgebildet sind. Dadurch bilden sich zusammen mit dem Scharnierelement 6 V-Nuten 12 zwischen den Ringelementen 4 aus. In Fig. 1b sind die V-Nuten 12 in langgestreckten flachen Form des Klemmrings 2 relativ breit zu erkennen, während in Fig. 4a, die V-Nuten 12 in der gebogenen Ringform des Klemmrings 2 schmaler, aber immer noch vorhanden sind.

Die Ringelemente 4 weisen weiterhin eine vorgegebene azimutale Länge auf, so dass durch ein Auftrennen des Streifens an Scharnierelementen 6 in Streifen mit mindestens zwei unterschiedlichen Anzahlen von Ringelementen 4 für mindestens zwei Klemmringe 2 für Fittings mit mindestens zwei unterschiedlichen Nennweiten möglich ist. Somit können aus dem endlos hergestellten Strang unterschiedlich lange Teilstücke als Klemmring 2 abgetrennt werden, die dann in gebogener Form jeweils für Fittings mit unterschiedliche Nennweiten geeignet sind. Diese Eigenschaft ist insbesondere im Hinblick auf die Effektivität der Herstellung vorteilhaft.

Als ein mögliches Beispiel werden die folgenden Werte angegebene:
Nennweite NW28: Innendurchmesser D=35mm und Umfang=109,96 mm (gleich Länge des Klemmrings)
Nennweite NW35: Innendurchmesser D=42mm und Umfang= 131,95 mm (gleich Länge des Klemmrings)

Daraus folgt bei einer Länge eines Ringelements von 11 mm, dass bei der Nennweite NW28 10 Elemente = 110 mm und bei der Nennweite NW35: 12 Elemente =132 mm eingesetzt werden können.

Die Ringelemente 4 weisen weiterhin an dem einer einzusetzenden Dichtung zugewandten Ende einen Dichtungssitz 14 auf, der durch ein axial vorstehendes Halteelement 16 ausgebildet ist. Der Dichtungssitz 14 sichert die Position der Dichtung innerhalb eines Fittings sowohl vor als auch nach dem Verpressen des Fittings.

Wie sich bereits unmittelbar aus Fig. 1a ergibt, sind die Ringelemente 4 unterschiedlich ausgebildet. Bevor auf die erfindungsgemäßen Hemmelemente eingegangen wird, werden zunächst die ergänzenden Ausgestaltungen der Ringelemente als Halteelemente und Fixierelemente erläutert.

Zum einen sind die Ringelemente 4 teilweise als Halteelemente 18 ausgebildet und weisen radial nach innen gerichtete elastische Führungselemente 20 für ein Zentrieren und gegebenenfalls Halten eines einzuführenden Rohres auf. Die Federelemente 20 sind so ausgebildet, dass definierte Montagekräfte und eine verbesserte Rohrhaltefunktion erreicht werden.

Die Führungselemente 20 sind gemäß Fig. 1a und 1c durch eine an drei Seiten verlaufende Freistellung 22 aus dem Material des Halteelementes 18 herausgearbeitet und sind somit elastisch federnd ausgestaltet. Radial nach innen gerichtet weisen die Führungselemente 20 vorstehende Keile 24 auf, die an dem einzuführenden Rohr anliegen und dieses führen, wie in Fig. 1c zu erkennen ist.

In axialer Richtung versetzt zu dem Führungselement 20 sind weniger weit nach radial innen vorstehende Führungselemente 26 ausgebildet. Somit erfolgt beim Einführen eines Rohres (in Fig. 1c von rechts kommend) eine erste Zentrierung durch das Führungselement 26 und eine zweite Zentrierung durch das Führungselement 20 mit dem Keil 24 bzw. den Keilen 24. Insbesondere schräg angesetzte Rohre werden durch diese unterschiedlich stark ausgeprägten Führungen zentriert und optimal im Fitting angeordnet. Das distale Führungselement 26 ragt somit weniger weit nach innen als das proximale Führungselement 20 aus Sicht des Fittings. Im vollständig eingeschobenen Zustand des Rohres halten die Führungselemente 20 und 26 das eingeschobene Rohr.

Zum anderen und alternativ zu den Halteelementen 18 ist ein weiterer Teil der Ringelemente 4 als Fixierelemente 28 ausgebildet und weisen jeweils mindestens ein Schneidelement 30 zum Fixieren eines einzuschiebenden Rohres auf, wie in Fig. 1f dargestellt ist. Dazu weist das Fixierelement 28 eine in den Fig. 1a, 1b, 1d und 1e gezeigte Ausnehmung 31 auf, in die das Schneidelement 30 eingesetzt wird. In den Fig. 1a, 1b, 1d und 1e ist das Fixierelement 28 ohne Schneidelement 30 und in Fig. 1f mit Schneidelement 30 gezeigt. Das Schneidelement 30 besteht dabei bevorzugt aus einem Metall und fixiert ein eingeschobenes Rohr nach dem Verpressen vor einem Herausziehen des Rohres aus dem Fitting.

Die dargestellten Fixierelemente 28 weisen weiterhin in Umfangsrichtung neben dem Schneidelement 30 angeordnete Schutzelemente 32 auf, die in radialer Richtung weiter als die Schneidelemente 30 nach innen ragen. Dadurch bilden die Schutzelemente 32 einen Schutz des Rohres beim Einschieben und vor dem Verpressen durch eine unbeabsichtigte Beschädigung der Oberfläche.

Das Ausführungsbeispiel der Fig. 1 bis 4 zeigt eine weitere mögliche Ausgestaltung der Ringelemente 4 in Form von erfindungsgemäßen Hemmelementen 33. Die Hemmelemente 33 weisen jeweils eine radial nach innen gerichtete Nocke 34 auf, die in radialer Richtung elastisch nach außen verformbar ausgebildet ist, in Fig. 1g nach oben. Im eingebauten Zustand, der weiter unten erläutert wird, befindet sich das Hemmelement 33 außen in Anlage an der Innenwand der Presshülse, so dass das Verformen der Nocke 34 weniger ein Durchbiegen und mehr eine Formänderung bedeutet.

Die Nocke 34 weist eine radial nach innen gerichtete gebogene Oberfläche 35 auf, in Fig. 1g nach unten gerichtet. Somit ist die Oberfläche 35 dem einzusteckenden Rohr zugewandt, wie sich weiter unten noch im Detail ergibt.

Des Weiteren ist die Nocke 34 in Einschubrichtung des Rohrs (in Fig. 1g von links) unter einem Winkel kleiner 90° zur Achse des einzuschiebenden Rohres schräg ausgerichtet. Diese schräge Ausrichtung ergibt sich durch geneigte Oberflächen 36a und 36b der Nocke 34.

Für die beschriebene Verformbarkeit der Nocke 34 und die damit notwendige Bewegungsfreiheit weist das Hemmelement 33 eine Freistellung 37 an mindestens einer Seite auf.

Zudem ist ein weiteres Führungselement 38 für eine Zentrierung des Rohres beim Einführen vorgesehen, dessen innere Oberfläche weniger weit nach innen ragt als die Nocke 34.

Wie sich aus Fig. 1a und1b sowie 2 bis 4a bis 4c ergibt, sind ein Teil der Ringelemente 4 als Halteelemente 18, ein Teil der Ringelemente 4 als Fixierelemente 28 und ein Teil als Hemmelemente 33 ausgebildet. Dabei wechseln sich die Halteelemente 18, die Fixierelemente 28 und die Hemmelemente 33 einander ab, so dass diese umfangseitig gleich verteilt angeordnet sind. Bei diesem Ausführungsbeispiel ist daher die Anzahl der Halteelemente 18 gleich der Anzahl der Fixierelemente 28 und gleich der Anzahl der Hemmelemente 33.

Grundsätzlich kann der Klemmring 2 beliebig ausgestaltet sein. Zum einen kann der Klemmring 2 nur Hemmelemente 33 aufweisen. Zum anderen kann der Klemmring 33 zusätzlich zu Hemmelementen 33 auch mindestens ein Halteelement und/oder mindestens ein Fixierelement 28 aufweisen.

Wie in den Fig. 3 und 4a dargestellt ist, wird der Streifen des Klemmrings 2 zu einem runden Klemmring 2 gebogen, wobei dessen Seitenenden an der mit dem Pfeil A gekennzeichneten Stelle eine offene Stelle bilden.

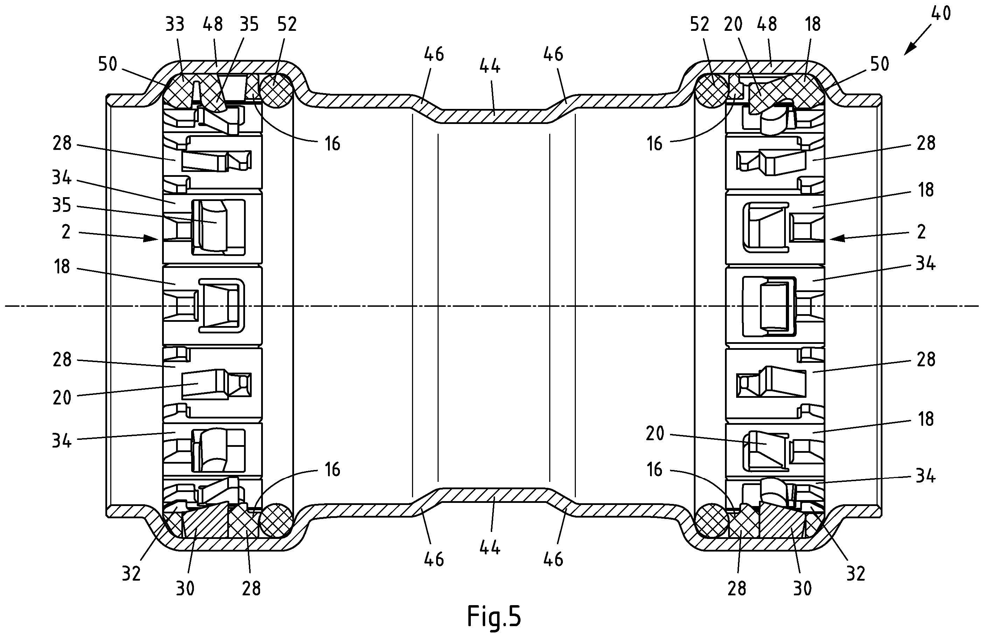

Die Fig. 5 bis 10 zeigen ein Ausführungsbeispiel eines Fittings 40 für eine Verbindung mit einem von außen abzudichtenden Rohr 42. Der Fitting 40 weist einen Grundkörper 44 und ein in dem Grundkörper 44 umfangseitig ausgebildeten und nach innen vorstehenden Anschlagelement 46 in Form einer Durchmesserverjüngung. Des Weiteren ist eine mit dem Grundkörper 44 verbundenen bildenden Presshülse 48 vorgesehen, wobei die Presshülse 48 eine nach innen zum aufzunehmenden Rohr 42 hin gerichtete Kammer 50 aufweist.

In der Kammer 50 ist der in den Fig. 1 bis 4 dargestellte Klemmring 2 angeordnet. Wie beschrieben besteht der Klemmring 2 aus einem Kunststoff und weist eine Mehrzahl von Ringelementen 4 auf. In der Kammer 50 ist angrenzend an das Anschlagelement 46 ein Dichtelement 52 angeordnet, das vorliegend als O-Ring ausgebildet ist.

Die Presshülse 48 ist geeignet, zusammen mit dem Klemmring 2, den Ringelementen 4 und dem Dichtelement 52 das zu verbindende Rohr 42 von außen abzudichten und zu fixieren.

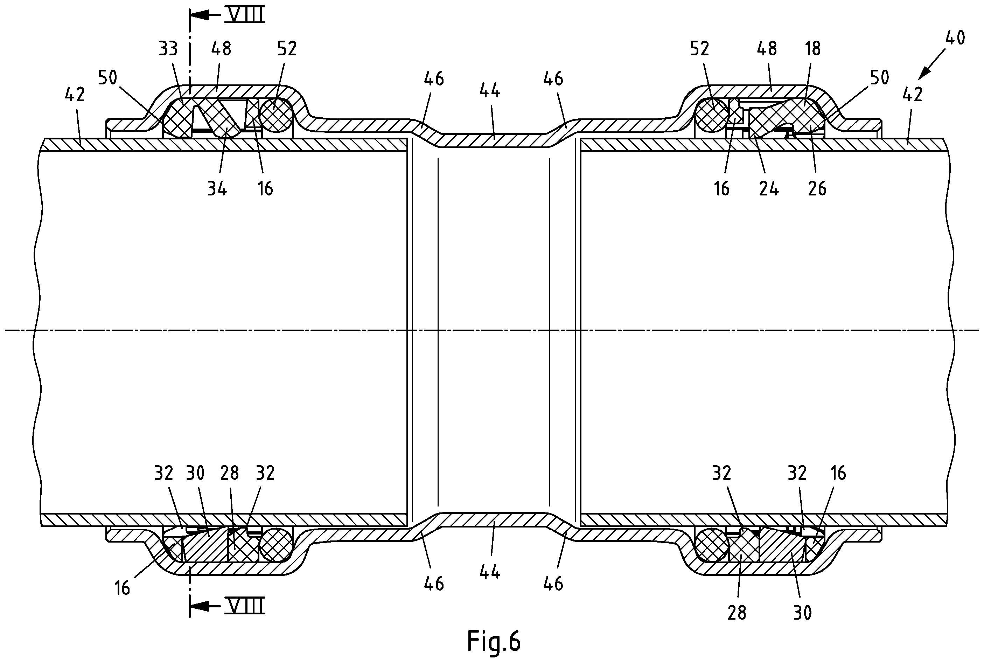

Fig. 5 zeigt den Fitting 40 in einem Querschnitt, der durch die oben und unten in der Kammer 50 angeordneten Ringelemente 4 verläuft. Im Querschnitt oben links ist ein Hemmelement 33 vorgesehen, oben rechts ist ein Halteelement 18 angeordnet und in beiden Presshülsen unten links und rechts sind Fixierelemente 28 angeordnet. Die Hemmelemente 33, die Halteelemente 18 und die Fixierelemente 28 entsprechen den in den Fig. 1 bis 4 dargestellten Ringelementen 4. Das Fixierelement 28 weist das nach innen hereinragende Schneidelement 30 auf. Fig. 6 zeigt den gleichen Fitting 40 wie Fig, 5 mit eingeschobenem Rohr 42 im unverpressten Zustand.

Nach Fig. 6 ergibt sich wie oben erläutert worden ist, dass die Führungselemente 20, 24 und 26 des Halteelements 18 (oben dargestellt) das Rohr 42 während des Einführens und vor dem Verpressen halten und zentrieren.

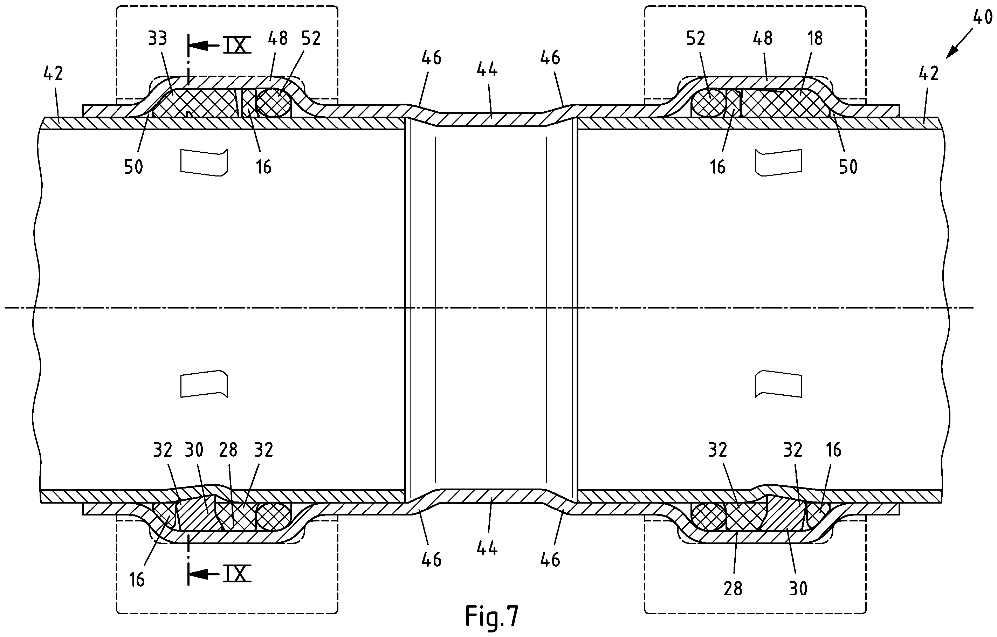

Fig. 7 zeigt dann den Fitting 40 im verpressten Zustand, der durch das Presswerkzeug 60 erzeugt wird. Insbesondere sind die integrierten Schneidelemente 30 nach dem Verpressen gemäß Fig. 7 in das Material des Rohres 42 eingedrungen sind und fixieren das Rohr 42 im Fitting 40.

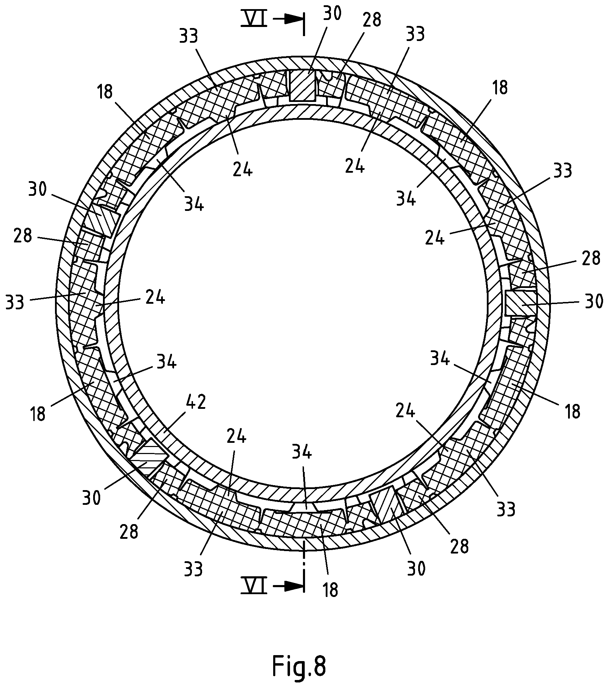

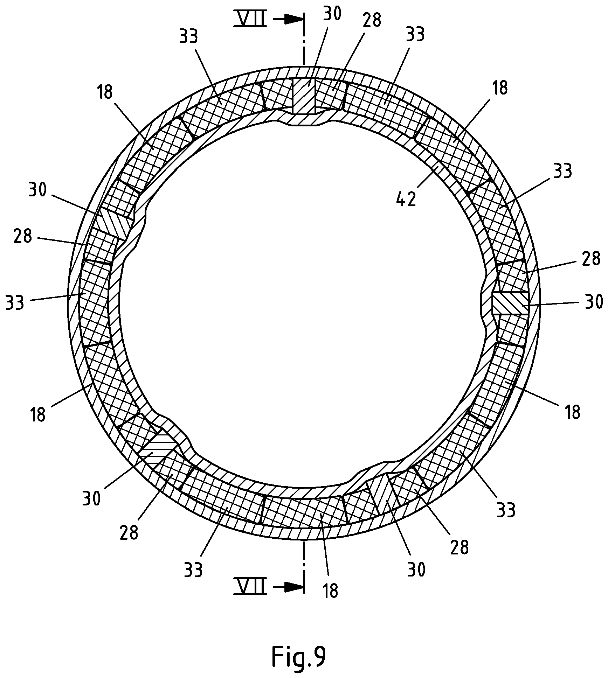

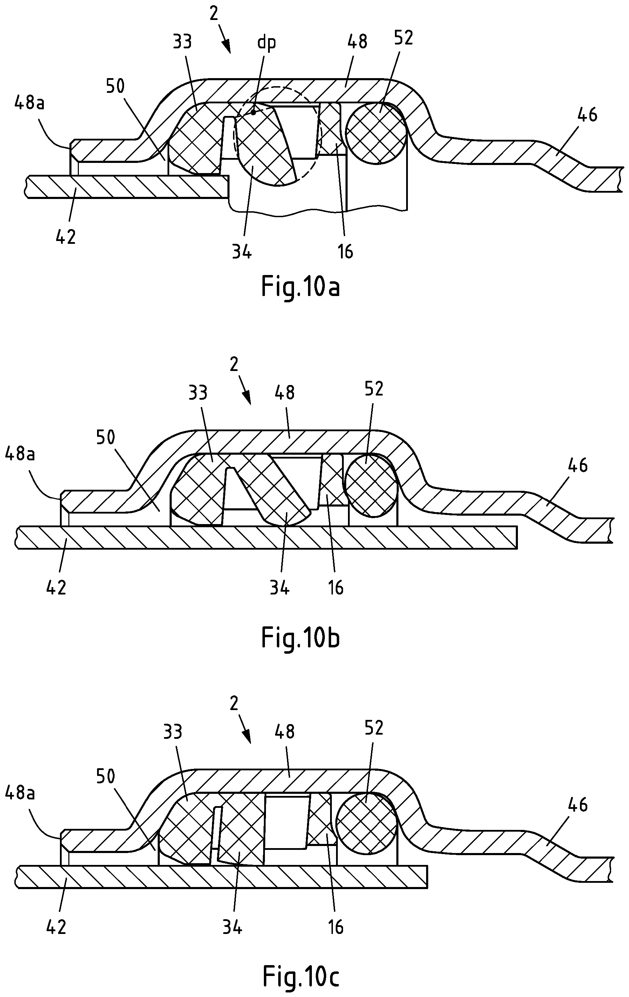

Die Fig. 8 und 9 zeigen jeweils einen Querschnitt des Fittings 40 im Bereich der Presshülse 48 mit Kammer 50. Im unverpressten Zustand nach Fig. 10a ist der Klemmring 2 innerhalb der Kammer 50 angeordnet und die Ringelemente 4 in Form sich abwechselnden Hemmelementen 33, Halteelementen 18 und Fixierelementen 28 liegen an der Innenseite der Kammer 50 an.

Fig. 9 zeigt den verpressten Zustand, in dem durch ein hier nicht dargestelltes Presswerkzeug 60, siehe Fig. 7 mit gestrichelten Linien, die Presshülse 48 radial nach innen umgeformt worden ist. Die Durchmesserverringerung führt einerseits zu einer Verringerung des Abstands zwischen den Hemmelementen 33, den Halteelementen 18 und den Fixierelementen 28, diese liegen nun aneinander an, und anderseits zu einem Eindringen der Schneidelemente 30 in die dadurch radial nach innen verformte Wandung des Rohres 42. Dadurch wird das Rohr 42 innerhalb des Fittings 40 fixiert und gegen ein Herausziehen oder Herausschieben und gegen ein axiales Verdrehen gesichert.

Die Fig. 10a bis 10c zeigen einen Ausschnitt des Fittings 40 mit einem einzuschiebenden Rohr 42 und mit einem eingeschobenen Rohr 42, wobei im dargestellten Querschnitt das Hemmelement 33 gezeigt ist. Im Vergleich zwischen den Fig. 10a, 10b und 10c ergibt sich die Wirkung des Hemmelements 33 mit dem Nocken 34, der mittels Haftreibung mit dem Rohr 42 verbundenen ist.

Fig. 10a zeigt den Zustand vor dem Einschieben des Rohrs 42, das mit einem axialen Abstand zum Fitting 40 und zum Hemmelement 33 aufweist. Die Nocke 34 weist die bereits beschriebene radial nach innen gerichtete gebogene Oberfläche 35 auf. Wie sich aus der gestrichelten Hilfslinie ergibt, ist die Form der Nocke 34 im Querschnitt abschnittsweise elliptisch ausgebildet. Die gebogene Form entspricht hier also eine Teilellipsenform. In Fig. 10a ist auch der exzentrische Drehpunkt dp eingezeichnet, um den sich der Nocken 34 während der Verformung beim Einschieben des Rohres verdreht, wobei diese Bewegung keine reine Drehbewegung ist, sondern auch Verformungskomponenten aufweist.

Fig. 10b zeigt den Zustand nach dem Einschieben des Rohrs 42, das an dem Anschlagelement 46 anliegt, also in der vorgesehenen Position für ein Verpressen angeordnet ist. Die Nocke 34 liegt dabei an der Oberfläche des Rohres 42 an und ist ein wenig aus der Ausgangsposition nach außen verbogen. Dadurch wird in erhöhter Anpressdruck zwischen der Nocke 34 und dem Rohr 42 erzeugt. Durch die Haftreibung ist der Klemmring 2 und mit ihm das Hemmelement 33 axial in die Presshülse 48 hinein verschoben worden. Diese Verschiebung wird auch an der leichten Verformung des Dichtelements 52 und an dem geringen Spalt zwischen dem Hemmelement 33 und der distalen Wand der Kammer 50 deutlich.

Wenn nach dem Einschieben des Rohres 42 dieses wieder herausgezogen wird, wird das Hemmelement 33 mit der Nocke 34 durch das Rohr 42 weiter verformt und zusammengepresst, da das Hemmelement 33 keinen ausreichenden Raum für eine Ausweichbewegung innerhalb der Kammer 50 hat. Dieser Zustand ist in Fig. 10c gezeigt. Aufgrund der nochmals erhöhten Haftreibung presst das Rohr 42 den Nocken 34 in axialer Richtung in Richtung des distalen Endes 48a der Presshülse 48, wodurch eine noch stärkere Verformung erzeugt wird. Die Kraft zum Herausziehen ist daher deutlich größer als beim Einschieben des Rohres 42.

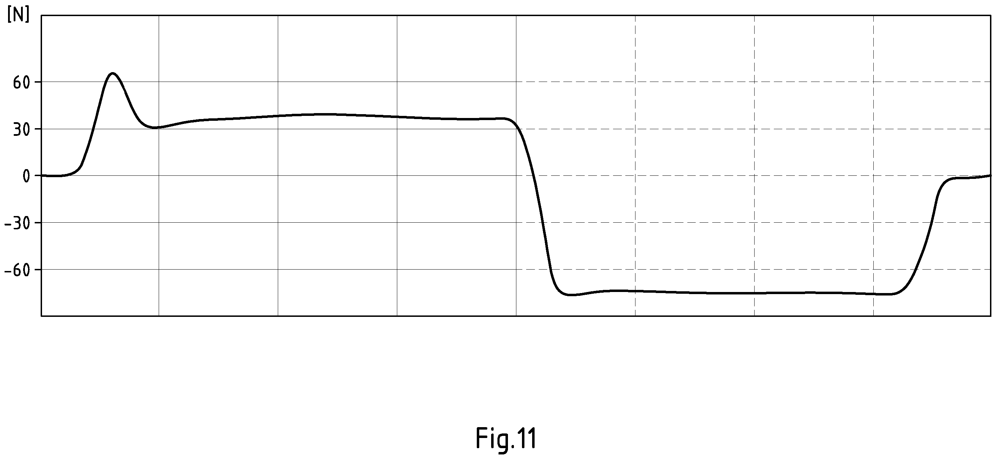

Fig. 11 zeigt einen Kraftverlauf für das Einschieben und Herausziehen eines Rohres 42 in den Fitting 40 mit einem Klemmring 2, der Hemmelemente 33 aufweist. Die linke Hälfte des Kraftverlaufs zeigt das Einschieben des Rohres 42 mit einer Kraft von ungefähr 33 N. Zu Beginn des Kraftverlaufes ist ein kurzzeitiges Maximum von ca. 65 N zu erkennen, die für das nach außen Drücken der Nocken 34 und für die Überwindung der Haftreibung zwischen dem ruhenden Rohr 42 und den Hemmelementen 33 bzw. deren Nocken 34 erforderlich ist.

Nachdem das Rohr 42 bis zum Anschlag 46 in das Fitting 40 eingeschoben worden ist, sinkt die Kraft auf 0 N, wonach unmittelbar das Herausziehen beginnt. Das Herausziehen ist mit negativen Kraftwerten dargestellt. Die aufzuwendende Kraft beträgt ungefähr - 65 N, ist also betragsmäßig ungefähr doppelt so groß wie beim Einschieben des Rohres 42.

Die beschriebene Ausgestaltung der Nocken 34 der Hemmelemente 33 führen zu dem gezeigten betragsmäßig asymmetrischen Kraftverlauf. Das Einschieben erfordert nur das Auslenkgen der Nocken 34 radial nach außen. Beim Herausziehen werden die Nocken 34 weiter innerhalb der Kammer 50 verformt und bilden für das Rohr 42 einen größeren Widerstand, der zu der betragsmäßig höheren Auszugskraft führt.

Die Hemmelemente 33 führen also zu einer verbesserten Selbsthemmung des Rohres 42 im Fitting 40.

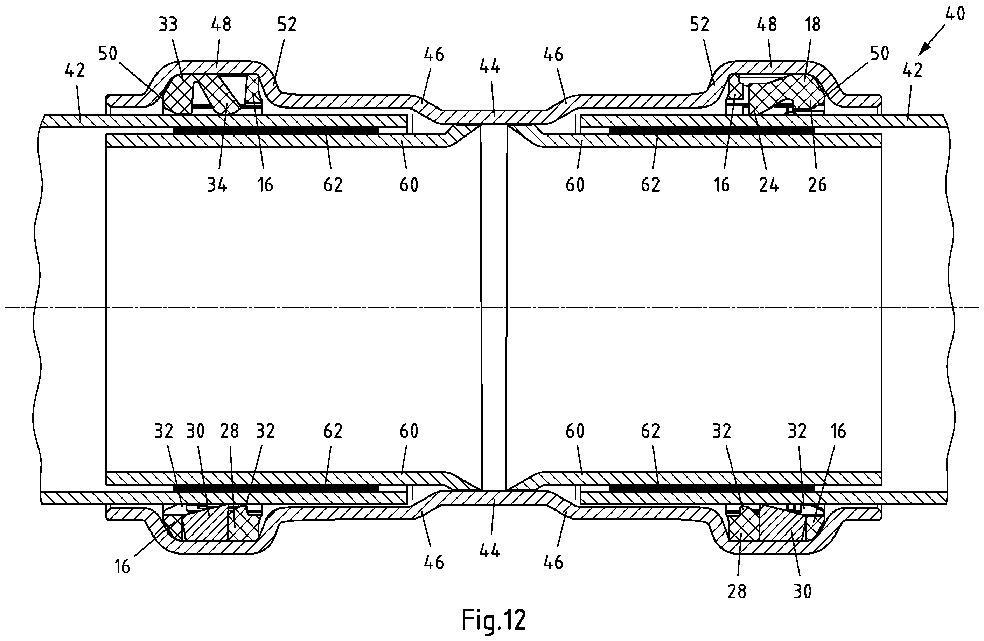

Fig. 12 zeigt ein weiteres Ausführungsbeispiel eines Fittings 40 für eine Verbindung mit einem von innen abzudichtenden Rohr 42. Die Kammer 50 enthält in diesem Fall nur den Klemmring 2 mit den Ringelementen 18, 28 und 33, wie es anhand der Fig. 5 bis 10a erläutert worden ist. Der Grundkörper 44 ist zudem mit einer Stützhülse 60 verbunden, die in das Innere des Rohres 42 eingreift. An der Außenseite der Stützhülse 60 ist ein Dichtelement 62 vorgesehen, das nach einem Verpressen des Fitting 40 das Rohr 42 von innen abdichtet.

## Patentansprüche

1. Klemmring für ein Fitting für eine Verbindung mit einem Rohr,
- mit einer Mehrzahl von Ringelementen (4),
- wobei die Ringelemente (4) zum Halten und/oder Fixieren eines einzusteckenden Rohrs ausgebildet sind,
**dadurch gekennzeichnet,**
- **dass** mindestens ein Ringelement (4) als Hemmelement (33) mit einer radial nach innen gerichteten Nocke (34) ausgebildet ist,
- **dass** die Nocke (34) in radialer Richtung elastisch nach außen verformbar ausgebildet ist und
- **dass** die Nocke (34) eine radial nach innen gerichtete gebogene Oberfläche (35) aufweist.

2. Klemmring nach Anspruch 1,
**dadurch gekennzeichnet,**
- **dass** die Nocke (34) in Einschubrichtung des Rohrs unter einem Winkel kleiner 90° zur Achse des einzuschiebenden Rohres schräg ausgerichtet ist.

3. Klemmring nach Anspruch 1 oder 2,
**dadurch gekennzeichnet,**
- **dass** mindestens drei Hemmelemente (33) mit Nocken (34) vorgesehen sind und
- **dass** die Nocken (34) an der radial nach innen gelegenen Seite einen Durchmesser kleiner als der Außendurchmesser des einzuschiebenden Rohrs bilden.

4. Klemmring nach einem der Ansprüche 1 bis 3,
**dadurch gekennzeichnet,**
- **dass** eine Mehrzahl von Scharnierelementen (6) zum verschwenkbaren Verbinden von jeweils zwei Ringelementen (4) vorgesehen ist,
- **dass** die Ringelemente (4) mittels der Scharnierelemente (6) eine Streifenform aufweisen und
- **dass** die Ringelemente (4) eine flache Form oder eine seitlich offene Ringform annehmen können.

5. Klemmring nach einem der Ansprüche 1 bis 3,
**dadurch gekennzeichnet,**
- **dass** die Ringelemente (4) einstückig als einseitig offener Ring ausgebildet sind.

6. Klemmring nach einem der Ansprüche 1 bis 5,
**dadurch gekennzeichnet,**
- **dass** die Ringelemente (4) teilweise als Halteelemente (18) ausgebildet sind und
- **dass** die Halteelemente (18) radial nach innen gerichtete, vorzugsweise elastisch ausgebildete, Führungselemente (20, 24, 26) für ein Zentrieren und gegebenenfalls Halten eines einzuführenden Rohres aufweisen.

7. Klemmring nach einem der Ansprüche 1 bis 6,
**dadurch gekennzeichnet,**
- **dass** die Ringelemente (4) teilweise als Fixierelemente (28) ausgebildet sind und
- **dass** die Fixierelemente (28) jeweils mindestens ein Schneidelement (30) zum Fixieren eines einzuschiebenden Rohres aufweisen.

8. Klemmring nach einem der Ansprüche 1 bis 7,
**dadurch gekennzeichnet,**
- **dass** ein Teil der Ringelemente (4) als Halteelemente (18) und/oder ein Teil der Ringelemente (4) als Fixierelemente (28) und/oder ein Teil der Ringelemente (4) als Hemmelemente (33) ausgebildet sind.

9. Fitting für eine Verbindung mit einem Rohr (42),
- mit einem Grundkörper (44),
- mit einem in dem Grundkörper (44) umfangseitig ausgebildeten und nach innen vorstehenden Anschlagelement (46),
- mit einer mit dem Grundkörper (44) verbundenen Presshülse (48), wobei die Presshülse (48) eine nach innen zum aufzunehmenden Rohr (42) hin gerichtete Kammer (50) aufweist,
- mit einem in der Kammer (50) angeordneten Klemmring (2), wobei der Klemmring (2) aus einem Kunststoff besteht und eine Mehrzahl von Ringelementen (4) aufweist, und
- mit einem Dichtelement (52, 62),
- wobei die Presshülse (48) geeignet ist, zusammen mit dem Klemmring (2) und dem Dichtelement (52, 62) das zu verbindende Rohr (42) abzudichten,
**dadurch gekennzeichnet,**
- **dass** der Klemmring (2) nach einem der Ansprüche 1 bis 9 ausgebildet ist.

10. System für eine Verbindung eines Fittings (40) mit einem Rohr (42),
- wobei das Fitting (40) nach Anspruch 9 ausgebildet ist,
- bei dem der Betrag der Auszugskraft größer als der Betrag der Einschubkraft zum Einschieben des Rohres (42) in das Fitting (40) ist.

11. System nach Anspruch 10,
**dadurch gekennzeichnet,**
- **dass** der Betrag der Auszugskraft vorzugsweise um mindestens 20 %, optional um mindestens 50 %, vorzugsweise um mindestens 80% und insbesondere um mindestens 100% größer als die Einschubkraft ist.
